# EUROPÄISCHE PATENTANMELDUNG

(11) **EP 1 157 951 A2**
(43) Veröffentlichungstag der Anmeldung: **28.11.2001**
(21) Anmeldenummer: 01111891.6
(22) Anmeldetag: 17.05.2001
(51) Int. Cl.: B65G 47/90

(54) **Handhabungsvorrichtung**

(30) Priorität: 23.05.2000 DE 10026545
(71) Anmelder: Komatec, Komponenten der Automatisierungstechnik Maschinenbau GmbH, 67677 Enkenbach-Alsenborn (DE)
(72) Erfinder: Meckel Bernd, D-67307 Göllheim (DE)
(74) Vertreter: Klein, Friedrich

(57) **Zusammenfassung**

Die Erfindung betrifft eine Handhabungsvorrichtung zur gleichzeitigen Handhabung mehrerer, insbesondere von zumindest drei, bis zu einem bestimmten Maße flexibel deformierbarer, auf einer Auflagefläche aufliegenden Objekten, die mit einem Greifer versehen ist, mit dem sich die auf der Auflagefläche angeordneten Objekte zwischen Greiferbacken klemmen und durch eine Verfahrbewegung des Greifers transportieren lassen, wobei eine Position von zumindest einem der Objekte (20-23) relativ gegenüber den restlichen Objekten (20-23) mittels einer Verschiebeeinrichtung veränderbar ist (Fig. 1).

## Beschreibung

Die Erfindung betrifft eine Handhabungsvorrichtung zur gleichzeitigen Handhabung mehrerer, insbesondere von zumindest drei, bis zu einem bestimmten Maße flexibel deformierbarer, auf einer Auflagefläche aufliegenden Objekten, wobei die Handhabungsvorrichtung mit einem Greifer versehen ist, mit dem sich die auf der Auflagefläche angeordneten Objekte zwischen Greiferbacken klemmen und durch eine Verfahrbewegung des Greifers transportieren lassen.

Die gleichzeitige Handhabung von mehreren flexibel verformbaren Objekten stellt besondere Anforderungen, insbesondere wenn die Objekte zwischen den Greiferbacken mit relativ glatten Flächen aneinander anliegen. Eine solche Situation ist bei dem bevorzugten Anwendungsgebiet für die vorliegende Erfindung gegeben, nämlich bei der Handhabung von in Plastikfolien verpackten geschnittenen Broten. Nachdem die Brote geschnitten und in die Plastikfolien verpackt sind, werden sie zur weiteren Handhabung, insbesondere zur Anordnung in Transportverpackungen wie Kartons, zunächst guppenweise bereitgestellt. Mittels eines Greifers werden die verpackten Brote vom Ort der Bereitstellung in die Verpackungen eingesetzt. Da die Plastikfolien relativ glatt sind, müssen die Brote mit vergleichsweise großer Klemmkraft gegriffen werden, damit während der Handhabung die Brote nicht aus dem Greifer herausrutschen. Durch die erforderliche hohe Klemmkraft werden die Brote jedoch oftmals beschädigt bzw. bleibend deformiert, was unbedingt zu vermeiden ist. Die Handhabung wird zusätzlich noch erschwert, da die Brote im Bereich der Krusten eine andere Elastizität zeigen, als im Bereich von Seitenflächen, die durch eine Brotkruste jeweils umrahmt ist.

Es sind deshalb für diesen Anwendungsfall bereits andere Greifer bekannt geworden. So werden beispielsweise Sauggreifer eingesetzt, die mittels Unterdruck die Brote handhaben. Diese Greifvorrichtungen haben jedoch den Nachteil, daß sie einen vergleichsweise hohen konstruktiven Aufwand erfordern und insbesondere bei Broten als Handhabungsobjekten wegen deren unregelmäßiger Oberfläche zu nicht ausreichender Funktionssicherheit neigen.

Aus einem anderen Anwendungsgebiet, nämlich der Handhabung von Kleidung, wie sie beim automatisierten Versand erforderlich ist, ist aus der EP 0 941 951 A1 ein Zweibackengreifer vorbekannt. Dessen beiden Greiferbacken führen beim Greifen eines Kleidungsstückes zueinander entgegengesetzte Schwenkbewegungen aus. Zudem soll mit einem in vertikaler Richtung zwischen den Greiferbacken verfahrbaren Saugmittel ein loser Folienabschnitt des Kleidungsstückes zwischen die beiden Greiferbacken gezogen werden, damit letzterer das Kleidungsstück sicher greifen kann. An dieser Vorrichtung kann als nachteilig gesehen werden, daß die Greiferbacken nur eine geringe Öffnungsweite aufweisen und sie deshalb nur zum Greifen von einem Objekt mit geringer Breite geeignet sind. Der hier vorhandene Sauggreifer trägt zum Greif- bzw. Haltevorgang des eigentlich zu greifenden Objektes, nämlich des Kleidungsstücks, nichts bei.

Der Erfindung liegt deshalb die Aufgabe zugrunde, eine Handhabungsvorrichtung und ein Verfahren für die gleichzeitige Handhabung von mehreren, mit einer ausreichenden Formstabilität versehenen, aber dennoch flexibel deformierbaren Handhabungsobjekten, insbesondere für Brote, bereitzustellen, wobei die Handhabungsvorrichtung bei möglichst einfachem Aufbau eine sichere Handhabung der Objekte zulassen soll. Die Handhabungsvorrichtung und das Verfahren sollen insbesondere zur Handhabung von geschnittenen und verpackten Broten geeignet sein.

Diese Aufgabe wird bei einer Vorrichtung der eingangs genannten Art erfindungsgemäß dadurch gelöst, daß die Position zumindest von einem der Objekte relativ gegenüber den restlichen Objekten mittels einer Verschiebeeinrichtung veränderbar ist. Die Verschiebeeinrichtung kann vorzugsweise als Hebeeinrichtung ausgebildet, die zumindest eines der Objekte von einer Position auf der Auflagefläche und zwischen den Greiferbacken in eine gegenüber der Auflagefläche höhere Position anhebbar ist und somit zwischen den Objekten in vertikaler Richtung einen Höhenunterschied erzeugt. Die Aufgabe wird zudem durch die Verfahren gemäß den Ansprüchen 18 und 21 gelöst.

Eine bevorzugte erfindungsgemäße Handhabungsvorrichtung sollte somit vorsehen, daß ausgehend von einer Position auf der Auflagefläche zumindest eines der Objekte zwischen Greiferbacken des Greifers in eine gegenüber der Auflagefläche höhere Position anhebbar ist. Diese zweckmäßgerweise im wesentlichen horizontal ausgerichtete Auflagefläche dient dazu, die in einer Reihe angeordneten Objekte für den Greifvorgang in einer definierten Position bereitzustellen. In diesem Zusammenhang kann unter Auflagefläche lediglich eine Fläche oder Ebene verstanden werden, auf der die Objekte aufliegen können. Es ist hierbei nicht erforderlich, daß es sich um eine in sich geschlossene Fläche handelt. So können auch Flächen vorgesehen sein, die mit Abstand zueinander angeordnete Stäbe, Rohre oder dergleichen aufweisen und die somit keine durchgehend geschlossene Fläche bilden, sondern mit Ausnehmungen versehen ist.

Mit der Hebe- oder einer anderen Verschiebeeinrichtung ist es möglich, ein oder mehrere der Objekte gegenüber anderen Objekten anzuheben bzw. zu verschieben, bevor die Objekte zwischen den Greiferbacken geklemmt werden. Vorzugsweise werden von den mehreren Handhabungsobjekte nur innere der in einer Reihe angeordneten Handhabungsobjekten angehoben. Die Koordination der zeitlichen Abfolge des Einsatzes der Verschiebeeinrichtung und der Greiferbacken kann hierbei vorzugsweise von einer Steuereinrichtung der Handhabungsvorrichtung vorgenommen werden. Nachdem die Greiferbacken die Objekte zwischen sich geklemmt haben, kann der angehobene Teil der Auf-lagefläche wieder abgesenkt werden. Eine untere Kante des zumindest einen angehobenen Objektes befindet sich damit oberhalb einer unteren Kante der äußeren Objekte, die an den Greiferbacken anliegen. Die Objekte sind somit in vertikaler Richtung gegeneinander versetzt. Die elastisch deformierbaren äußeren Objekte können sich damit aufgrund ihrer Elastizität mit dem Abschnitt ihrer Seitenfläche, gegen den das jeweilige innere Objekt nicht anliegt, geringfügig unter das innere Objekt schieben. Durch diesen Vorgang werden die bzw. das innere Objekt, nicht nur durch die von den Greiferbacken ausgeübten und auf sie übertragenen im wesentlichen horizontal ausgerichteten Klemmkraft gehalten. Es kommt vielmehr hinzu, daß das bzw. die inneren Handhabungsobjekte von den beiden äußeren Objekten in einer einem Formschluß ähnlichen Weise gehalten werden, in dem diese eine Öffnungsweite unterhalb des bzw. der inneren Objekte bilden, die kleiner ist als eine (Gesamt-)Breite der inneren Objekte. Somit liegen innere Handhabungsobjekte mit einer unteren Kante auf inneren Seitenflächen der äußeren Handhabungsobjekte auf.

Dieser Effekt kann in vorteilhafterweise durch schräg verlaufenden Endabschnitte der Greiferbacken unterstützt werden. Die schrägen Endabschnitte bewirken, daß die Abschnitte der zu den inneren Objekte weisenden Seitenflächen, die keinen Kontakt zu den inneren Objekten haben, besonders weit unter die inneren Handhabungsobjekte geschoben werden. Hierdurch können die inneren Objekte besonders rutschsicher und stabil zwischen den äußeren Objekten gehalten werden. Außerdem bilden die jeweils inneren Objekte, vorzugsweise Brote, und die ihnen näherliegenden Greiferbacken einen Abstand zueinander, der kleiner ist als eine Breite der äußeren Brote, wenn diese keine Klemmkraft erfahren. Dies verhindert somit auch, daß die äußeren Brote sich in eine Richtung vertikal nach unten bewegen können.

Es hat sich hierbei als vorteilhaft erwiesen, wenn ein Knickwinkel, um den die Endabschnitte gegenüber den Hauptabschnitten der Greiferbacken abgewinkelt sind aus einem Bereich von 3° bis 25°, vorzugsweise von 5° bis 20°, besonders bevorzugt von 7° bis 15°, gewählt ist.

Weitere bevorzugte Ausführungsbeispiele der Erfindung ergeben sich aus den abhängigen Patentansprüchen, der Beschreibung und der Zeichnung. Die Erfindung wird nachfolgend anhand des in den Figuren schematisch dargestellten Ausführungsbeispiels näher erläutert; es zeigen:
- Fig. 1:: eine erfindungsgemäße Handhabungsvorrichtung in einer Vorderansicht;
- Fig. 2:: die Handhabungsvorrichtung gemäß Fig. 1 in einer Seitenansicht.

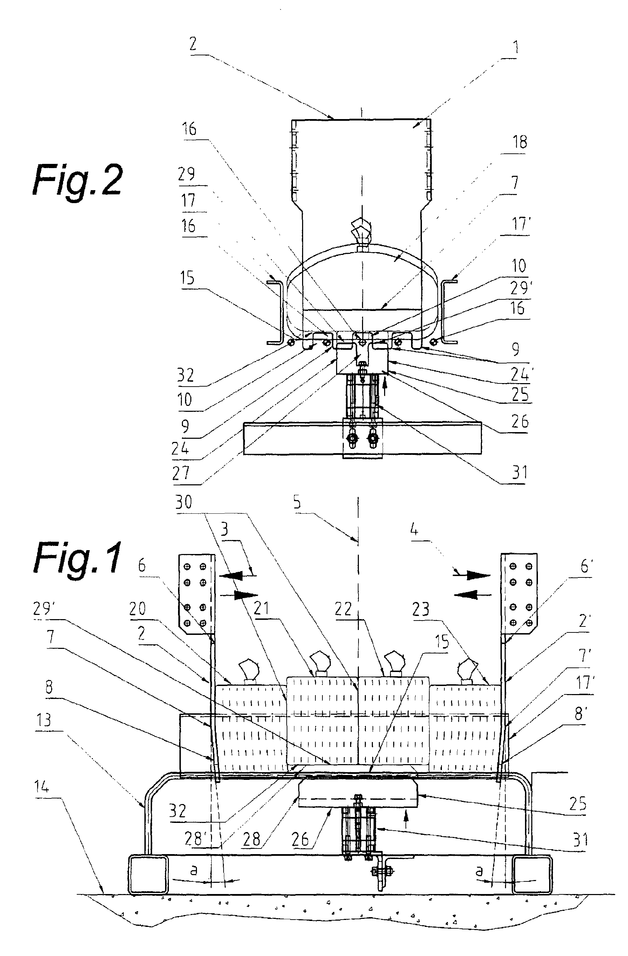

Die in den Fig. 1 und Fig. 2 gezeigte erfindungsgemäße Handhabungsvorrichtung dient zur gleichzeitigen Handhabung mehrerer vorgeschnittener und in Plastikfolien verpackter Brote und weist einen auf die Bedürfnisse als Brotgreifer abgestimmten, teilweise dargestellten, Greifer 1 auf. Dieser ist mit zwei simultan parallel, hierbei aber zueinander entgegengesetzt, bewegbaren Greiferbacken 2, 2' versehen, wie dies durch die die Bewegunsrichtungen der Greiferbacken andeutenden Doppelpfeile 3, 4 dargestellt ist. Die Greiferbacken 2, 2' sind bezüglich einer orthogonal zur Zeichenebene von Fig. 1 verlaufenden mittigen Ebene 5 spiegelsymmetrisch aufgebaut. Zur Ausführung der Bewegungen sind die Greiferbacken 2, 2' mit einer nicht näher dargestellten Antriebseinrichtung wirkverbunden, beispielsweise einem Elektromotor oder einem Pneumatikzylinder.

Die im wesentlichen plattenförmigen Greiferbacken 2, 2' weisen jeweils einen vertikal ausgerichteten Hauptabschnitt 6, 6' auf. Bei beiden Greiferbacken 2, 2' schließt sich an einer horizontal und über eine gesamte Breite der Greiferbacken 2, 2' verlaufenden Knicklinie 7, 7' ein ebener Endabschnitt 8, 8' an, der mit dem ebenfalls ebenen Hauptabschnitt 6, 6' einen Knickkwinkel a von ca. 5° einschließt. Die Endabschnitte 8, 8' sind an einer Stirnseite ihrer freien Enden jeweils zinnenförmig ausgebildet, d.h. sie weisen mehrere gleichgroße und im gleichen Abstand zueinander angeordnete, im wesentlichen rechteckige Fortsätze 9 auf, die zwischen sich Ausnehmungen 10, ausbilden.

Innerhalb des Verfahrbereiches des Greifers 1 ist ein Gestell 13 vorgesehen, das eine mit Abstand zu einer Bodenfläche 14 angeordnete, horizontal ausgerichtete Auflagefläche 15 bildet, die in Fig. 2 durch eine Strichpunktlinie angedeutet ist. Die Auflagefläche 15 weist parallel und mit jeweils gleichem Abstand zueinander ausgerichtete Rundstäbe 16 auf. Die Auflagefläche 15 ist an ihren beiden Längsseiten von sich jeweils vertikal erhebenden Begrenzungswänden 17, 17' eingerahmt. Die Begrenzungswände 17, 17' bilden zusammen mit der Auflagefläche 15 einen Einschubkanal 18, in den eine vorbestimmte Anzahl der gleichzeitig von dem Greifer zu erfassenden Brote 20, 21, 22, 23 in einer nicht dargestellten Weise eingeschoben werden. Gemäß Fig. 2 ist eine Breite des Einschubkanals 18 geringfügig größer als eine Länge der quer in den Einschubkanal eingeschobenen Brote 20-23.

Im Bereich der Auflagefläche 15 ist eine mit zwei parallel zueinander verlaufenden Schenkeln 24, 24' versehene Hubleiste 25 einer Hebeeinrichtung vorgesehen. Die beiden im wesentlichen identischen Schenkel 24, 24' sind über einen Steg 26 einstückig miteinander verbunden und bilden zwischen sich eine Nut 27 aus. Die Hubleiste 25 ist hierbei so bemessen, daß eine Länge der Hubleiste 25 größer als eine Breite eines Brotes 20-23, jedoch kleiner ist als eine Gesamtbreite von zwei nebeneinander angeordneten Broten. In Bezug auf einen Abstand der beiden in der dargestellten Greifposition angeordneten Greiferbacken 2, 2' und einem Abstand der beiden Begrenzungswände 17, 17' befindet sich die Hubleiste 25 jeweils in der Mitte. Sie ist ferner so ausgerichtet, daß die Nut 27 unterhalb eines mittleren Stabes 16 der Auflagefläche 15 und parallel zu diesem angeordnet ist. Eine Breite der Nut 27 ist hierbei grösser als ein Durchmesser des mittleren Stabs 16. Desweiteren ist eine Breite der beiden Schenkel 24, 24' kleiner als Abstände, um den nebeneinander angeordnete Stäbe 16 voneinander beabstandet sind. Die Schenkel 24, 24' sind somit zwischen jeweils zwei Stäben 16 hindurchführbar.

Die Hubleiste 25 ist mittels eines unter ihr angeordneten und am Gestell 13 befestigten pneumatischen Antriebes 31, beispielsweise eines doppelt wirkenden Pneumatikzylinders, in vertikaler Richtung von einer unteren Endposition in eine obere Endposition und vice versa verfahrbar. Die Hubleiste ist in den beiden Figuren mit durchgezogenen und gestrichelten Linien in beiden Endpositionen gezeigt, wobei die untere Endposition mit dem Bezugszeichen 28 und die obere Endposition mit dem Bezugszeichen 28' gekennzeichnet ist. In der unteren Endposition 28 befinden sich im wesentlichen ebene Oberseiten 29, 29' der beiden Schenkel 24, 24' unterhalb der von den Stäben 16 gebildeten Auflagefläche 15. In der oberen Endposition der Hubleiste 25 befinden sich hingegen die Oberseiten 29, 29' über der Auflägefläche 15. In dieser Position ist der mittlere Stab 16 innerhalb der Nut 27 gegenüber dem Steg 26 angeordnet.

Die Abläufe bei der Handhabung von Broten unter Verwendung des Greifers 1 können nun wie folgt gestaltet sein. Bevor der Greifvorgang beginnt, werden vier in Plastikfolien verpackte, geschnittene und im wesentlichen vertikale Seitenflächen 30 aufweisende Brote 20-23 in den Einschubkanal 18 eingeschoben, so daß sie mit ihren Seitenflächen 30 aneinander anliegen. Nun wird der Greifer 1 von oben nach unten verfahren, so daß sich die Greiferbacken 2, 2' jeweils neben den beiden äußeren Broten 20, 23, aber noch mit Abstand zu diesen befinden. In dieser Position greifen die Fortsätze 9 der freien Enden der Greiferbacken jeweils zwischen zwei Stäbe 16 ein und sind damit unterhalb der Auflagefläche 15 angeordnet. Die Ausnehmungen 10 der Endabschnitte nehmen nun, bis auf die beiden äußeren Ausnehmungen 10, jeweils einen Rundstab 16 auf. Von dieser Position ausgehend beginnen sich nun die Greiferbacken 2, 2' durch eine horizontale Verfahrbewegung zu schließen, bis sie einen vorbestimmten Abstand zueinander aufweisen. Im wesentlichen gleichzeitig beginnt sich die Hubleiste 25 von ihrer unteren Endposition in Richtung auf ihre obere Endposition zu bewegen. Noch bevor die beiden Greiferbacken 2, 2' gegen die äußeren Brote 20, 23 drücken, kommt die Hubleiste 25 mit den mit den Brotkrusten der Unterseiten 32 der beiden inneren Brote 21, 22 in Kontakt und hebt letztere gegenüber den äußeren Broten 20, 23 vertikal nach oben bis in die obere Endposition an. Die beiden Greiferbacken 2, 2' drücken nun mit immer stärkerem Druck gegen die beiden äußeren Brote 20, 23, bis sie ihre Greifendlage erreicht haben. Diese Situation ist in den Figuren dargestellt.

Wie in Fig. 1 zu erkennen ist, liegen die äußeren Brote 20, 23 sowohl gegen den Hauptabschnitt 6, 6' als auch gegen die schrägen Endabschnitte 8, 8' der Greiferbacken 2, 2' an. Die beiden äußeren Brote 20, 23 werden dadurch mit ihrem nicht am jeweils benachbarten inneren Brot anliegenden Teil ihrer Seitenfläche 30 jeweils in Richtung des benachbarten inneren Brots 21, 22 und - zumindest geringfügig - unter dieses geschoben. Anders als in dem Bereich, in dem die äußeren Brote 20, 23 auf ihrer einen Seite sowohl gegen die Greiferbacken 2, 2' als auch auf ihrer anderen Seite gegen das jeweils benachbarte Brot anliegen, werden die äußeren Brote hier im wesentlichen nicht, zumindest jedoch weniger, flexibel komprimiert. Aufgrund der Klemmkraft und der Form des Greifers werden die äußere Brote 20, 23 mit dem unteren Teil der Brotkruste in Richtung der beiden inneren Brote 21, 22 einige Millimeter unter diese geschoben. Die beiden äußeren Brote 20, 23 haben dadurch mit ihren unteren Brotkrusten einen Abstand zueinander, der geringer ist als die Gesamtbreite der beiden inneren Brote. Zusammen mit der von den Greiferbacken 2, 2' über die äußeren Brote 20, 23 ausgeübten Klemmkraft sichert dies während des Handhabungsvorgangs eine stabile Lage der vier Brote zwischen den Greiferbacken. Die vier Brote können nun von dem Greifer zusammen angehoben werden, durch den Greifer beschleunigt, mit hoher Geschwindigkeit verfahren und in einen nicht dargestellten Verpackungskarton eingesetzt werden.

Bei dem vorstehend beschriebenen Ausführungsbeispiel werden die inneren Handhabungsobjekte zur Erzielung des erwähnten Formschlusses zwischen ihnen und den äußeren Handhabungsobjekten vor ihrem Erfassen durch die Greiferbacken um einen bestimmten Betrag gegenüber den äußeren Handhabungsobjekten angehoben.

Es liegt selbstverständlich im Rahmen der erfindungsgemäßen Lehre diesen Formschluß auch auf andere Weise zu erreichen.

Dies kann beispielsweise dadurch erreicht werden, daß die inneren Handhabungsobjekte vor ihrem Erfassen durch die Greiferbacken gegenüber den äußeren Handhabungsobjekten quer zum Einschubkanal verschoben werden.

Hierzu kann die Hebeeinrichtung durch eine die inneren Handhabungsobjekte quer zum Einschubkanal verlagernde Schiebeeinrichtung ersetzt werden. Dazu wäre die Auflagefläche 15 mit ihren Stäben 16 gegenüber der in der Zeichnung dargestellten Lage um 90 Grad gedreht anzuordnen und ihr anstelle der Hubbewegung eine quer zum Einschubkanal gerichtete Schiebebewegung zu erteilen.

Auch kann die Verlagerung der inneren Handhabungsobjekte quer zum Einschubkanal durch die Greiferbacken erfolgen. Hierzu ist dann ein Greifer mit um eine vertikale Achse schwenkbaren Greiferbacken zu verwenden, die vor Ausübung ihrer Klemmkraft die inneren Handhabungsobjekte gegenüber den äußeren Handhabungsobjekten quer zum Einschubkanal verschieben, danach um die genannte Achse um 90 Grad verschwenkt werden, um dann in der in der Zeichnung dargestellten Lage ihre Klemmkraft auf die äußeren Handhabungsobjekte auszuüben.

## Patentansprüche

1. Handhabungsvorrichtung zur gleichzeitigen Handhabung mehrerer, bis zu einem bestimmten Maße flexibel deformierbarer, auf einer Auflagefläche aufliegenden Objekte, die Handhabungsvorrichtung mit einem Greifer versehen ist, mit dem sich die auf der Auflagefläche angeordneten Objekte zwischen Greiferbacken klemmen und durch eine Verfahrbewegung des Greifers transportieren lassen, **dadurch gekennzeichnet,**
**daß** eine Position von zumindest einem der Objekte (20-23) relativ gegenüber den restlichen Objekten (20-23) mittels einer Verschiebeeinrichtung veränderbar ist.

2. Handhabungsvorrichtung nach Anspruch 1, **gekennzeichnet durch** eine Steuereinrichtung, welche zunächst die Verschiebeeinrichtung betätigt, welche **dadurch** zumindest eines der Objekte verschiebt und danach die Greiferbacken (2, 2') veranlaßt die Objekte zwischen sich zu klemmen.

3. Handhabungsvorrichtung nach Anspruch 2, **dadurch gekennzeichnet,**
**daß** mit der Verschiebeeinrichtung ein inneres Objekt zu einem Zeitpunkt anhebbar ist, zu dem die Greiferbacken (2, 2') des Greifers (1) einen vorbestimmten Abstand zueinander aufweisen.

4. Handhabungsvorrichtung nach einem oder mehreren der vorhergehenden Ansprüche, **dadurch gekennzeichnet,**
**daß** mittels der Verschiebeeinrichtung von zumindest einem der Objekten in vertikaler Richtung ein Höhenunterschied gegenüber den anderen Objekten erzeugbar ist.

5. Handhabungsvorrichtung nach Anspruch 4, **dadurch gekennzeichnet,**
**daß** zumindest eines der Objekte mittels einer als Hebeeinrichtung ausgebildeten Verschiebeeinrichtung von einer Position auf der Auflagefläche (15) und zwischen den Greiferbacken (2, 2') in eine gegenüber der Auflagefläche (15) höhere Position anhebbar ist.

6. Handhabungsvorrichtung nach Anspruch 5, **dadurch gekennzeichnet,**
**daß** die Hebeeinrichtung unter der Auflagefläche (15) angeordnet ist und eine Hubleiste (25) der Hebevorrichtung in Anlage gegen eine Unterseite des zumindest einen inneren Objektes bringbar ist.

7. Handhabungsvorrichtung nach einem oder mehreren der vorhergehenden Ansprüche, **dadurch gekennzeichnet,**
**daß** die Auflagefläche (15) mit Ausnehmungen versehen ist, in welche der Greifer (1) mit Fortsätzen (9) von Endabschnitten (8, 8') der Greiferbacken (2, 2') eingreifen kann.

8. Handhabungsvorrichtung nach Anspruch 7, **dadurch gekennzeichnet,**
**daß** zur Ausbildung von Ausnehmungen, die Auflagefläche (15) mehrere, mit Abstand zueinander, parallel ausgerichtete Stäbe (16) aufweist und die Greiferbacken (2, 2') an einer Stirnseite mit mehreren Ausnehmungen (10) und Fortsätzen (9) versehen sind, wobei eine Breite der Fortsätze (9) kleiner ist als ein Abstand von nebeneinander angeordneten Stäbe, wodurch die Fortsätze zwischen Stäben (16) angeordnet werden können.

9. Handhabungsvorrichtung nach einem oder mehreren der vorhergehenden Ansprüche, **dadurch gekennzeichnet,**
**daß** die Greiferbacken (2, 2') zumindest mit freien Endabschnitten (8, 8') zueinander geneigt ausgebildet sind.

10. Handhabungsvorrichtung nach Anspruch 9, **dadurch gekennzeichnet,**
**daß** die freien Endabschnitte mit einem Hauptabschnitt der jeweiligen Greiferbacke (2, 2') einen Knickwinkel (a) aus einem Bereich von 5° bis 20° einschließt.

11. Handhabungseinrichtung nach einem oder mehreren der vorhergehenden Ansprüche, **dadurch gekennzeichnet,**
**daß** die beiden Greiferbacken durch Einsatz einer Antriebseinrichtung zueinander parallel beweglich sind.

12. Handhabungsvorrichtung nach einem oder mehreren der vorhergehenden Ansprüche, **dadurch gekennzeichnet,**
**daß** die freien Endabschnitte (8, 8') an einer Stirnseite der Greiferbacken (2, 2') jeweils Fortsätze (9) und dazwischen angeordnete Ausnehmungen (10) aufweisen.

13. Brotgreifvorrichtung zur Handhabung mehrerer verpackter Brote, welche einen Zweibackengreifer aufweist, insbesondere nach einem oder mehreren der vorhergehenden Ansprüche, **gekennzeichnet durch**
zwei Greiferbacken, deren Endabschnitte gegenüber einem jeweiligen Hauptabschnitt jeweils einen Knickwinkel (a) einschließen.

14. Handhabungsvorrichtung zur gleichzeitigen Handhabung mehrerer, bis zu einem bestimmten Maße flexibel deformierbarer, auf einer Auf-lagefläche in Reihe nebeneinander liegender Objekte, die mit einem Greifer versehen ist, mit dem sich die auf der Auflagefläche angeordneten Objekte zwischen Greiferbacken klemmen und durch eine Verfahrbewegung des Greifers transportieren lassen, insbesondere nach Anspruch 1, **dadurch gekennzeichnet,**
**daß** zumindest eines der Objekte auf der Auflagefläche (15) mittels einer Schiebeeinrichtung derart quer zur Reihe verschiebbar ist, daß dieses gegenüber der Reihe zurücksteht.

15. Handhabungsvorrichtung nach Anspruch 14, **gekennzeichnet durch**
eine Steuereinrichtung, welche zunächst die Schiebeeinrichtung betätigt, welche **dadurch** die Objekte verschiebt und danach die Greiferbacken (2, 2') veranlaßt die Objekte zwischen sich zu klemmen.

16. Handhabungsvorrichtung nach Anspruch 14, **dadurch gekennzeichnet,**
**daß** die Schiebeeinrichtung von den Greiferbacken (2,2') gebildet ist und diese um eine zur Auflagefläche senkrecht gerichtete Achse schwenkbar sind.

17. Handhabungsvorrichtung nach Anspruch 14, **dadurch gekennzeichnet,**
**daß** die Auflagefläche zur Bildung der Schiebeeinrichtung mit einem Antrieb verbunden und quer zur Reihe der Objekte verschiebbar ist.

18. Verfahren zur gleichzeitigen Handhabung mehrerer, zumindest drei, in Scheiben geschnittener und einzeln verpackter Brote, die auf einer Auflagefläche nebeneinander angeordnet und dort von einem Greifer erfaßt werden, **dadurch gekennzeichnet,**
**daß** zumindest eines der Brote (20, 21' 22, 23) von einer Verschiebeeinrichtung verschoben wird, bevor der Greifer (1) sämtliche Brote (20-23) zwischen Greiferbacken (2, 2') klemmt.

19. Verfahren nach Anspruch 18, **dadurch gekennzeichnet,**
**daß** eine Hebeeinrichtung zumindest eines der Brote (20-23) anhebt, bevor der Greifer (1) sämtliche Brote (20-23) zwischen Greiferbacken (2, 2') klemmt.

20. Verfahren nach Anspruch 18, **dadurch gekennzeichnet,**
**daß** zumindest ein zwischen anderen Broten (20-23) angeordnetes Brot (20-23) angehoben wird und die Brote (20, 23), gegen welche die Greiferbacken (2, 2') zur Anlage kommen, auf der Auflagefläche (15) verbleiben, bis der Greifer eine Greifendlage erreicht hat, in welcher die Brote (20-23) zwischen den Greiferbacken (2, 2') geklemmt sind.

21. Verfahren zur gleichzeitigen Handhabung mehrerer, zumindest drei, in Scheiben geschnittener und einzeln verpackter Brote, die auf einer Auflagefläche in Reihe nebeneinander angeordnet sind und dort von einem Greifer erfaßt werden, **dadurch gekennzeichnet,**
**daß** zumindest eines der Brote (20, 21' 22, 23) von einer Schiebeeinrichtung quer zur Reihe verschoben wird, bevor der Greifer (1) sämtliche Brote (20-23) zwischen Greiferbacken (2, 2') klemmt.

22. Verfahren nach Anspruch 20, **dadurch gekennzeichnet,**
**daß** zumindest ein zwischen anderen Broten (20-23) angeordnetes Brot (20-23) quer zur Reihe verschoben wird und die Brote (20, 23), gegen welche die Greiferbacken (2, 2') zur Anlage kommen, in der Reihe verbleiben, bis der Greifer eine Greifendlage erreicht hat, in welcher die Brote (2023) zwischen den Greiferbacken (2, 2') geklemmt sind.
